# EUROPÄISCHE PATENTSCHRIFT

(11) **EP 3 224 559 B1**
(45) Veröffentlichungstag und Bekanntmachung des Hinweises auf die Patenterteilung: **29.11.2023**
(21) Anmeldenummer: 15797595.4
(22) Anmeldetag: 23.10.2015
(51) Int. Cl.: F25D 23/06, F16L 59/06

(54) **VAKUUMDÄMMKÖRPER**
VACUUM INSULATION BODY
ÉLÉMENT D'ISOLATION SOUS VIDE

(30) Priorität: 25.11.2014 DE 102014017424; 12.12.2014 DE 102014018549; 24.06.2015 DE 102015008123
(43) Veröffentlichungstag der Anmeldung: 04.10.2017
(73) Patentinhaber: Liebherr-Hausgeräte Lienz GmbH, 9900 Lienz (AT); Liebherr-Hausgeräte Ochsenhausen GmbH, 88416 Ochsenhausen (DE)
(72) Erfinder: HIEMEYER, Jochen, 97753 Karlstadt (DE); FREITAG, Michael, 97082 Würzburg (DE); KERSTNER, Martin, 97072 Würzburg (DE); STOCKER, Richard, 9911 Assling (AT)
(74) Vertreter: Herrmann, Uwe
(86) Internationale Anmeldenummer: PCT/EP2015/002107
(87) Internationale Veröffentlichungsnummer: WO 2016/082905

(56) Entgegenhaltungen:
- EP-A1- 3 027 953
- US-A- 4 486 482
- US-A- 5 500 305
- US-A- 5 625 742

## Beschreibung

Die vorliegende Erfindung betrifft einen Vakuumdämmkörper mit wenigstens einer vakuumdichten Umhüllung und mit wenigstens einen Vakuumbereich, der von der Umhüllung umgeben ist, wobei die Umhüllung mit wenigstens einer Öffnung, insbesondere mit wenigstens einem Evakuierstutzen, zur Evakuierung des Vakuumbereichs versehen ist und wobei sich in dem Vakuumdämmkörper wenigstens ein adsobierendes Material befindet, das teilweise oder insgesamt im Bereich der genannten Öffnung angeordnet ist.

Aus dem Stand der Technik ist es bekannt, beispielsweise zur Wärmedämmung von Kühl- bzw. Gefriergeräten Vakuumdämmkörper einzusetzen, die sich in dem Bereich zwischen dem Außenmantel des Gerätes und dem Innenbehälter bzw. der Innenseite der Tür befinden.

Die nachfolgenden Überlegungen sind keineswegs auf Kühl- und/oder Gefriergeräte beschränkt sondern gelten für wärmeisolierte Behältnisse im Allgemeinen.

Derartige Vakuumdämmkörper sind üblicherweise aus einer vakuumdichten Umhüllung aufgebaut, die wenigstens einen von der Umhüllung umgebenen Vakuumbereich umgibt. In diesem befindet sich ein Stütz- bzw. Kernmaterial, das dem Vakuumdämmkörper die erforderliche mechanische Stabilität verleiht und das zudem verhindert, dass die Seiten der Umhüllung aneinander liegen, wenn Vakuum herrscht.

Dringt Gas in den Vakuumbereich ein, bewirkt dies einen Anstieg des Gasdruckes sowie einen Anstieg der Wärmeleitfähigkeit und verringert auf diese Weise die Wirksamkeit des Vakuumdämmkörpers. Insbesondere die Permeation von Wasser durch die Umhüllung des Dämmkörpers ist aufgrund der höheren Permeationsraten im Vergleich zu Sauerstoff und Stickstoff ausschlaggebend für einen Anstieg der Wärmeleitfähigkeit des Vakuumdämmkörpers.

Um einen derartigen negativen Einfluss zu reduzieren bzw. ganz auszuschließen, ist es bekannt, ein Material mit einem hohen Adsorptionsvermögen für Wasser in den Vakuumbereich zu geben, um auch bei eindringendem Wasserdampf den Partialdruck im Vakuumbereich gering zu halten. Als solches Material kommt z.B. Zeolith in Betracht. Auch Materialien die durch Chemisorption von Sauerstoff und Stickstoff deren Partialdruck gering halten ("getter") kommen in Betracht und dienen ebenfalls dazu, die Alterung des Vakuumdämmkörpers aufgrund von Gaseintrag diese Gase zu verzögern und somit die Wärmedämmeigenschaften so lange wie möglich aufrecht zu erhalten.

Um Vakuum in den Vakuumbereich zu erzeugen ist der Vakuumdämmkörper mit einem Evakuierstutzen versehen, an dem Unterdruck angelegt wird und durch den das Gas aus dem Vakuumbereich abgezogen wird. Das gesamte Gas oder ein wesentlicher Teil des Gases muss aus dem Innenraum des Vakuumdämmkörpers bzw. aus dem Kernmaterial durch den Evakuierstutzen hindurch entfernt werden. Dazu kann das adsorbierende Material im Bereich der genannten Öffnung des Vakuumdämmkörpers bzw. von dessen Umhüllung angeordnet werden, wodurch sich die Vakuumerzeugung effizienter gestalten lässt.

Ist die Vakuumausbildung abgeschlossen, wird der Evakuierstutzen, bei dem es sich beispielsweise um einen Folienschlauch handelt, z.B. durch thermische Siegelung diffusionsdicht, d.h. vakuumdicht verschlossen.

Aus der US 5,500,305 A und aus der US 4,486,482 A sind ein vakuumisoliertes Paneel und ein Verfahren zum Herstellen eines solchen Paneels bekannt, wobei das vakuumisolierte Paneel aus umfangsseitig angeordneten starren Materialien besteht, beispielsweise aus geschweißten Metallwandelementen oder dergleichen.

Der vorliegenden Erfindung liegt die Aufgabe zugrunde, eine im Vakuumdämmkörper der eingangs genannten Art dahingehend weiterzubilden, dass sich die Vakuumbildung besonders prozesssicher und kostengünstig durchführen lässt.

Diese Aufgabe wird durch einen Vakuumdämmkörper mit den Merkmalen des Anspruchs 1 gelöst, danach ist vorgesehen, dass um die Öffnung herum und innerhalb des Vakuumbereiches wenigstens eine Platte angeordnet ist, die eine Wandung des Raumes bildet, in dem sich das adsorbierende Material befindet.

Die Platte verhindert, dass die Umhüllung bzw. die Hüllfolie des Vakuumdämmkörpers die Kontur des adsorbierenden Materials, das beispielsweise als Kügelchen bzw. Schüttung vorliegen kann, nachbildet, wobei die Folie ggf. sogar beschädigt würde. Die Platte stellt somit einen Schutz der Hüllfolie vor der Beschädigung durch das adsobierende Material dar, das sich ohne die Platte ggf. in die Folie bzw. Umhüllung hineindrückt. Dieses Hineindrücken bzw. Nachbilden der Kontur kann nicht nur zu einer Beschädigung der Umhüllung, sondern auch dazu führen, dass Strömungskanäle zwischen den Kügelchen etc. versperrt werden. Hingegen bestehen Strömungskanäle zwischen dem adsorbierenden Material und der Platte, da die Platte so ausgebildet ist, dass sich das adsorbierende Material auch bei Ausbildung von Vakuum nicht oder allenfalls unwesentlich in die Platte hineindrückt.

Ein weiterer Vorteil der Platte ist eine gute Ankopplungsmöglichkeit für eine Heizeinrichtung, wie beispielsweise für eine Heizplatte zum Erwärmen während des Evakuiervorgangs.

Erfindungsgemäß befindet sich die Platte innerhalb des Vakuumbereiches und begrenzt zumindest auf einer Seite, vorzugsweise auf der Seite der Umhüllung den Raum, in dem sich das adsorbierende Material befindet.

Es kann vorgesehen sein, dass zwischen dem adsobierenden Material und der Öffnung wenigstens ein Formteil angeordnet ist, das eine oder mehrere Formteilöffnungen aufweist, deren Strömungsquerschnitt größer ist als der Strömungsquerschnitt der Öffnung der Umhüllung. Ein solcher Strömungsverteiler verbessert den Strömungsübergang bzw. verringert den Strömungswiderstand zwischen dem adsorbierenden Material und dem Evakuierstutzen, da der freie Strömungsquerschnitt vergrößert wird. Dies wird dadurch erreicht, dass der Strömungsquerschnitt des Formteils größer ist, als der Durchmesser der Öffnung der Umhüllung, sodass eine größere Oberfläche zur Durchströmung zur Verfügung steht. So ist es möglich, dass auch bei einem tiefen Druckbereich eine laminare Strömung vorliegt.

Das Formteil dient als primärer Strömungsverteiler bzw. Mittel zur Förderung der Strömung. Es kann als Spritzgussbauteil ausgeführt sein.

Zusätzlich zu dieser Funktion kann das Formteil auch eine Aufnahme für die Klemmvorrichtung der Folienschlauchverschweißung des Evakuierstutzens und/oder für das Rohr der Evakuiervorrichtung bilden.

Vorzugsweise ist vorgesehen, dass das adsorbierende Material in Form einer Mehrzahl einzelner Körper, vorzugsweise in Form einer Mehrzahl einzelner Kugeln oder sonstiger sphärischer Körper und besonders bevorzugt in Form einer Schüttung vorliegt.

In einer weiteren Ausgestaltung der Erfindung ist vorgesehen, dass wenigstens ein Filtermaterial, insbesondere wenigstens ein Fließmaterial angeordnet ist, das sich zwischen dem Kernmaterial, wie z.B. Perlit, des Vakuumdämmkörpers und dem adsorbierenden Material erstreckt.

Dieses Filtermaterial bildet somit gleichsam die Barriere bzw. die Grenze zwischen dem Kernmaterial des Vakuumdämmkörpers und dem adsorbierenden Material, dass sich in dem Bereich der Öffnung der Umhüllung befindet.

Bei dem Filtermaterial kann es sich z.B. um ein Vlies handeln.

Das Filtermaterial kann mit der genannten Platte und/oder mit dem genannten Formteil zur Strömungsverbesserung und/oder mit der Umhüllung selbst thermisch versiegelt sein.

Erfindungsgemäß ist vorgesehen, dass die vakuumdichte Umhüllung aus einer Hochbarrierefolie besteht. Es kann weiterhin vorgesehen sein, dass diese beidseitig mit einer siegelfähigen Schicht ausgestattet ist.

Weiterhin kann vorgesehen sein, dass sich die vakuumdichte Umhüllung um die Öffnung der Umhüllung erstreckt. Dabei grenzt sie vorzugsweise außen an die Platte an, sodass die Platte im Vakuumbereich angeordnet ist.

Denkbar ist es weiterhin, dass die genannte Platte und der genannte Formkörper aus unterschiedlichen Teilen bestehen, die z.B. miteinander verrastet oder thermisch versiegelt sind oder auch anderweitig miteinander verbunden sind. Von der Erfindung ist jedoch auch der Fall umfasst, dass die Platte und der Formkörper aus ein und demselben Teil bestehen bzw. insgesamt einteilig ausgeführt sind.

In einer weiteren Ausgestaltung der Erfindung ist vorgesehen, dass das adsorbierende Material unmittelbar angrenzend an die Öffnung der Umhüllung und/oder unmittelbar angrenzend an das Formteil angeordnet ist, auch ist es denkbar, dass das adsorbierende Material so angeordnet ist, dass es die genannte Öffnung und/oder das Formteil umgibt.

Das adsorbierende Material kann in einem Bereich angeordnet sein, der zu der Öffnung und/oder zu dem Formteil benachbart ist. Es ist vorzugsweise so angeordnet, dass das bei der Vakuumerzeugung durch die Öffnung hindurch tretende Gas teilweise oder insgesamt durch das adsorbierende Material hindurch tritt.

In einer weiteren Ausgestaltung der Erfindung ist vorgesehen, dass das adsobierende Material derart ausgebildet ist, dass dieses Wasser und/oder Stickstoff- und/oder Sauerstoff adsorbiert. Denkbar ist es, dass es sich bei dem adsorbierenen Material um wenigstens einen Getter und/oder Zeolith handelt. Zusätzlich oder alternativ zu Zeolith kann auch ein anderes bzw. weiteres Trockenmittel eingesetzt werden. Der Begriff Zeolith steht somit auch als Platzhalter für einen beliebigen anderen bzw. weiteren Trockner.

Die vorliegende Erfindung betrifft des Weiteren ein wärmeisoliertes Behältnis, vorzugsweise ein Kühl- und/oder Gefriergerät mit wenigstens einem Korpus und wenigstens einem temperierten und vorzugsweise gekühlten Innenraum, der von dem Korpus umgeben ist sowie mit wenigstens einem Verschlusselement mittels dessen der temperierte und vorzugsweise gekühlte Innenraum verschließbar ist, wobei sich zwischen dem temperierten und vorzugsweise gekühlten Innenraum und der Außenwand des Behältnisses und vorzugsweise Gerätes wenigstens ein Zwischenraum befindet, in dem sich zumindest ein Vakuumdämmkörper gemäß der Erfindung befindet.

Der Vakuumdämmkörper kann somit zwischen dem Außenmantel und dem Innenbehälter des Korpus oder auch zwischen der Außen- und Innenseite der Tür oder eines sonstigen Verschlusselementes angeordnet sein.

Besonders bevorzugt ist eine Ausführung, bei der zwischen der den Innenraum begrenzenden Innenwand und der Außenhaut eine Wärmedämmung angeordnet ist, die aus einem Vollvakuumsystem besteht. Darunter ist eine Wärmedämmung zu verstehen, die ausschließlich oder überwiegend aus einem evakuierten Bereich besteht, der mit einem Kernmaterial gefüllt ist. Die Begrenzung dieses Bereiches kann beispielsweise durch eine vakuumdichte Folie und vorzugsweise durch eine Hochbarrierefolie gebildet werden. Somit kann zwischen der Innenwand des Behältnisses, vorzugsweise Geräts und der Außenhaut des Behältnisses, vorzugsweise Gerätes, als Wärmedämmung ausschließlich ein solcher Folienkörper vorliegen, der einen durch eine vakuumdichte Folie umgebenen Bereich aufweist, in dem Vakuum herrscht und in dem ein Kernmaterial angeordnet ist. Eine Ausschäumung und/oder Vakuumisolationspaneele als Wärmedämmung oder eine sonstige Wärmedämmung außer dem Vollvakuumsystem zwischen der Innenseite und der Außenseite des Behältnisses bzw. Gerätes sind vorzugsweise nicht vorgesehen.

Diese bevorzugte Art der Wärmedämmung in Form eines Vollvakuumsystems kann sich zwischen der den Innenraum begrenzenden Wand und der Außenhaut des Korpus und/oder zwischen der Innenseite und der Außenseite des Verschlusselementes, wie z.B. einer Tür, Klappe, Deckel oder dergleichen erstrecken.

Das Vollvakuumsystem kann so erhalten werden, dass eine Umhüllung aus einer gasdichten Folie mit einem Kernmaterial gefüllt und anschließend vakuumdicht versiegelt wird. In einer Ausführungsform erfolgt sowohl das Befüllen als auch das vakuumdichte Versiegeln der Umhüllung bei Normal- bzw. Umgebungsdruck. Die Evakuierung erfolgt dann durch Anschluss einer geeigneten in die Umhüllung eingearbeiteten Schnittstelle, beispielsweise eines Evakuierungsstutzens, der ein Ventil aufweisen kann, an eine Vakuumpumpe. Vorzugsweise herrscht während der Evakuierung außerhalb der Umhüllung Normal- bzw. Umgebungsdruck. Es ist in dieser Ausführungsform vorzugsweise zu keinem Zeitpunkt der Herstellung erforderlich, die Umhüllung in eine Vakuumkammer einzubringen. Insofern kann in einer Ausführungsform während der Herstellung der Vakuumdämmung auf eine Vakuumkammer verzichtet werden.

Wie oben ausgeführt, besteht das adsorbierende Material vorzugsweise aus Zeolithkügelchen und/oder aus Kügelchen eines anderen Trockenmaterials. Diese werden von dem Kernmaterial (z.B. Perlit) des Vakuumdämmkörpers vorzugsweise durch ein Filtervlies abgetrennt. Letzteres ist vorzugsweise auf die genannte Platte sowie auf den Strömungsverteiler, d.h. das Formteil aufgeschweißt. Die Platte und der Strömungsverteiler bzw. das Formteil können durch eine Rastverbindung oder auch anderweitig miteinander verbunden werden.

Bevorzugt ist es, dass das Filtermaterial an allen Seiten über die Platte, die auch als Grundplatte bezeichnet wird, hinaus nach außen übersteht, da das komplette Bauteil einschließlich eines Stückes der Hochbarrierefolie dadurch in einfacher Weise mit der Siegelschicht der (weiteren) Hochbarrierefolie des Vakuumdämmkörpers verbunden werden kann.

In einer weiteren Ausgestaltung der Erfindung ist das gesamte Bauteil (Formteil, Grundplatte und Vlies) auf einem Stück aus Hochbarrierefolie befestigt, die beidseitig mit siegelfähigen Schichten ausgestattet ist, da dadurch die komplette Gruppe durch eine einfache Siegelverbindung in einem Prozess integriert werden kann.

Somit wird vorzugsweise eine Baugruppe umfassend das Formteil, die Grundplatte, das Vlies und ggf. das adsorbierende Material sowie ein Stück einer Hochbarrierefolie gebildet, wobei vorzugsweise vorgesehen ist, dass die Hochbarrierefolie der Baugruppe die größte Ausdehnung hat, d.h. die Randbereiche der Baugruppe bildet.

Diese Baugruppe kann als solche vorbereitet werden und dann mit der Hochbarrierefolie der vakuumdichten Umhüllung verbunden werden, wobei dazu die Hochbarrierefolie der Baugruppe in eine Öffnung der Hochbarrierefolie der vakuumdichten Umhüllung eingesetzt wird und mit der Hochbarrierefolie der vakuumdichten Umhüllung vakuumdicht verbunden und vorzugsweise versiegelt wird.

Außer einer Verrastung zwischen dem plattenförmigen Material bzw. der Platte und dem Formteil, kommt beispielsweise auch deren thermische Versiegelung miteinander in Betracht.

Unter einer vakuumdichten oder diffusionsdichten Umhüllung bzw. unter einer vakuumdichten oder diffusionsdichten Verbindung bzw. unter dem Begriff Hochbarrierefolie wird vorzugsweise eine Umhüllung bzw. eine Verbindung bzw. eine Folie verstanden, mittels derer der Gaseintrag in den Vakuumdämmkörper so stark reduziert ist, dass der durch Gaseintrag bedingte Anstieg in der Wärmeleitfähigkeit des Vakuumdämmkörpers über dessen Lebensdauer hinweg ausreichend gering ist. Als Lebensdauer ist beispielsweise ein Zeitraum von 15 Jahren, vorzugsweise von 20 Jahren und besonders bevorzugt von 30 Jahren anzusetzen. Vorzugsweise liegt der durch Gaseintrag bedingte Anstieg in der Wärmeleitfähigkeit des Vakuumdämmkörpers über dessen Lebensdauer bei < 100 % und besonders bevorzugt bei < 50 %.

Vorzugsweise ist die flächenspezifische Gasdurchgangsrate der Umhüllung bzw. der Verbindung bzw. der Hochbarrierefolie < 10-5 mbar * I / s *m² und besonders bevorzugt < 10-6 mbar * I / s *m² (gemessen nach ASTM D-3985). Diese Gasdurchgangsrate gilt für Stickstoff und Sauerstoff. Für andere Gassorten (insbesondere Wasserdampf) bestehen ebenfalls niedrige Gasdurchgangsraten vorzugweise im Bereich von < 10-2 mbar * l / s * m² und besonders bevorzugt im Bereich von < 10-3 mbar * l / s * m² (gemessen nach ASTM F-1249-90). Vorzugsweise werden durch diese geringen Gasdurchgangsraten die vorgenannten geringen Anstiege der Wärmeleitfähigkeit erreicht.

Ein aus dem Bereich der Vakuumpaneele bekanntes Hüllsystem sind sogenannte Hochbarrierefolien. Darunter werden im Rahmen der vorliegenden Erfindung vorzugsweise Ein- oder Mehrschichtfolien (die vorzugsweise siegelfähig sind) mit einer oder mehreren Barriereschichten (typischerweise metallische Schichten oder Oxid-Schichten, wobei als Metall oder Oxid vorzugsweise Aluminium bzw. ein Aluminiumoxid Verwendung findet) verstanden, die den oben genannten Anforderungen (Anstieg der Wärmeleitfähigkeit und/oder flächenspezifische Gasdurchgangsrate) als Barriere gegen den Gaseintrag genügen.

Bei den oben genannten Werten bzw. bei dem Aufbau der Hochbarrierefolie handelt es sich um exemplarische, bevorzugte Angaben, die die Erfindung nicht beschränken.

Der temperierte Innenraum ist je nach Art des Gerätes (Kühlgerät, Wärmeschrank etc.) entweder gekühlt oder beheizt. Wärmeisolierte Behältnisse im Sinne der vorliegenden Erfindung weisen mindestens einen temperierten Innenraum auf, wobei dieser gekühlt oder beheizt sein kann, so dass sich in dem Innenraum eine Temperatur unterhalb oder oberhalb der Umgebungstemperatur von z.B. 21 °C ergibt. Die Erfindung ist also nicht auf Kühl- und/oder Gefriergeräte beschränkt sondern betrifft allgemein Geräte mit einem temperierten Innenraum, beispielsweise auch Wärmeschränke oder Wärmetruhen.

In einer Ausführungsform ist vorgesehen, dass es sich bei dem erfindungsgemäßen Behältnis um ein Kühl- und/oder Gefriergerät, insbesondere um ein Haushaltsgerät bzw. ein gewerbliches Kühlgerät handelt. Beispielsweise sind solche Geräte umfasst, die für eine stationäre Anordnung im Haushalt, in einem Hotelzimmer, in einer gewerblichen Küche oder in einer Bar konzipiert sind. Beispielsweise kann es sich auch um einen Weinkühlschrank handeln. Ferner sind auch Kühl- und/oder Gefriertruhen von der Erfindung umfasst. Die erfindungsgemäßen Geräte können eine Schnittstelle zur Anbindung an eine Stromversorgung, insbesondere an ein Haushaltsstromnetz (z.B. einen Stecker) und/oder eine Steh- oder Einbauhilfe wie beispielsweise Stellfüße oder Schnittstelle zur Fixierung innerhalb einer Möbelnische aufweisen. Beispielsweise kann es sich bei dem Gerät um ein Einbaugerät oder auch um ein Standgerät handeln.

Vorzugsweise ist das Behältnis bzw. das Gerät derart ausgebildet, dass es mit einer Wechselspannung, wie beispielsweise mit einer Hausnetzspannung von z.B. 120 V und 60 Hz oder 230 V und 50 Hz betrieben werden kann. In einer alternativen Ausführungsform ist denkbar, dass das Behältnis bzw. das Gerät derart ausgebildet, dass es mit Gleichstrom einer Spannung von beispielsweise 5 V, 12 V oder 24 V betrieben werden kann. In dieser Ausgestaltung kann vorgesehen sein, dass innerhalb oder außerhalb des Gerätes ein Steckernetzteil vorgesehen ist, über welches das Gerät betrieben wird. Ein Betrieb mit Gleichspannung kann insbesondere dann zur Anwendung kommen, wenn das Behältnis eine thermoelektrische Wärmepumpe zum Temperieren des Innenraums aufweist.

Insbesondere kann vorgesehen sein, dass das Kühl- und/oder Gefriergerät eine schrankartige Gestalt hat und einen Nutzraum aufweist, der an seiner Vorderseite (im Falle einer Truhe an der Oberseite) für einen Benutzer zugänglich ist. Der Nutzraum kann in mehrere Kompartimente unterteilt sein, die alle bei derselben oder bei unterschiedlichen Temperaturen betrieben werden. Alternativ kann lediglich ein Kompartiment vorgesehen sein. Innerhalb des Nutzraumes bzw. eines Kompartiments können auch Lagerungshilfen wie beispielsweise Ablagefächer, Schubladen oder Flaschenhalter (im Falle einer Truhe auch Raumteiler) vorgesehen sein, um eine optimale Lagerung von Kühl- oder Gefriergütern und eine optimale Platzausnützung zu gewährleisten.

Der Nutzraum kann durch wenigstens eine um eine vertikale Achse schwenkbare Türe verschlossen sein. Im Falle einer Truhe ist eine um eine horizontale Achse schwenkbare Klappe oder ein Schiebedeckel als Verschlusselement denkbar. Die Türe oder ein sonstiges Verschlusselement kann im geschlossenen Zustand anhand einer umlaufenden Magnetdichtung mit dem Korpus im Wesentlichen luftdicht in Verbindung stehen. Vorzugsweise ist auch die Türe bzw. ein sonstiges Verschlusselement wärmeisoliert, wobei die Wärmeisolierung anhand einer Ausschäumung und ggf. anhand von Vakuumisolationspaneelen erreicht werden kann, oder auch vorzugsweise anhand eines Vakuumsystems und besonders bevorzugt anhand eines Vollvakuumsystems. An der Innenseite der Türe können ggf. Türabsteller vorgesehen sein, um auch dort Kühlgüter lagern zu können.

In einer Ausführungsform kann es sich um ein Kleingerät handeln. In derartigen Geräten weist der Nutzraum, der durch die Innenwand des Behälters definiert ist, beispielsweise ein Volumen von kleiner 0,5 m³, kleiner 0,4 m³ oder kleiner 0,3 m³ auf. Die Außenabmessungen des Behälters bzw. Gerätes liegen vorzugsweise im Bereich bis 1 m hinsichtlich der Höhe, der Breite und der Tiefe.

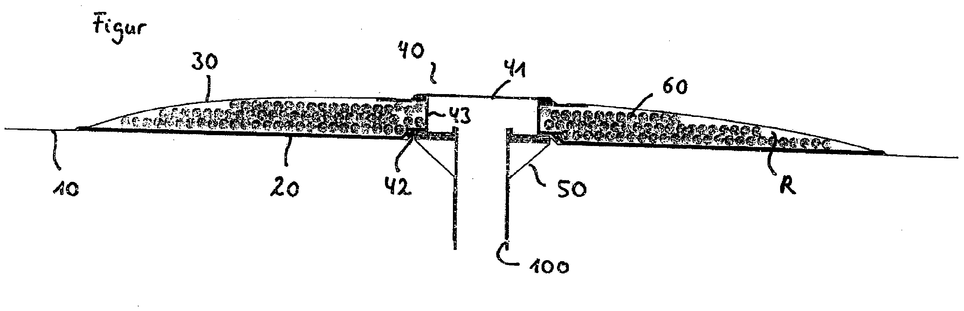

Weitere Einzelheiten und Vorteile der Erfindung werden anhand eines in der Zeichnung dargestellten Ausführungsbeispiels näher erläutert.

Die einzige Figur zeigt in einer perspektivischen Schnittansicht einen exemplarischen Aufbau eines erfindungsgemäßen Vakuumdämmkörpers im Bereich des Evakuierstutzens. Der Vakuumdämmkörper umfasst eine Hochbarrierefolie 10, die einen Vakuumbereich umschließt, der sich gemäß der Figur oberhalb des dargestellten Ausschnittes der Hochbarrierefolie 10 erstreckt.

Die Anordnung gemäß der Figur kann auch als solche, d.h. als Baugruppe (mit oder ohne Trockner bzw. Getter 60) bereitgestellt werden und dann mit der weiteren Hochbarrierefolie des Vakuumdämmkörpers im Rahmen des Herstellprozesses vakuumdicht verbunden werden.

Das Bezugszeichen 20 kennzeichnet die Platte bzw. Grundplatte, die aus einem Material gefertigt ist, das gegenüber dem Einbringen von Zeolithkügelchen bei Vakuumausbildung widerstandfähig ist, sodass die Kügelchen sich nicht in das Material der Grundplatte 20 hineindrücken können.

Das Bezugszeichen 30 kennzeichnet ein Filtervlies, um das nicht dargestellte Kernmaterial, das sich oberhalb des Filtervlieses und oberhalb der Hochbarrierefolie befindet von der Sorbtionspumpe bzw. von dem Raum R zu trennen. In dem Raum R befindet sich das adsorbierende Material 60, bei dem es sich z.B. um Zeolithkügelchen bzw. eine Schüttung aus Zeolithkügelchen handeln kann.

Das Bezugszeichen 40 kennzeichnet schließlich das erfindungsgemäße Formteil, das als Strömungsverteiler bzw. Strömungsvermittler von dem Raum zu dem Evakuierstutzen 50 dient. Der Evakuierstutzen 50 besteht aus einem Folienschlauch und ist ebenfalls vakuumdicht. Vorzugsweise besteht auch der Evakuierstutzen 50 aus einer Hochbarrierefolie. Er steht in geeigneter Weise vakuumdicht mit der Hochbarrierefolie 10 in Verbindung.

Wie dies aus der Figur weiter hervorgeht, weist der Strömungsverteiler einen oberen plattenförmigen Abschnitt 41 auf, an dem das Filtervlies 30 befestigt ist. Des Weiteren ist ein unterer Abschnitt 42 dargestellt, der mit der Platte 10 z.B. thermisch versiegelt oder anderweitig verbunden ist. Zwischen den Bereichen 41 und 42 erstreckt sich ein umlaufender Bereich 43, der z.B. die Form eines Zylinderstücks aufweisen kann und der Durchbrechungen aufweist, durch die das beim Evakuieren anfallende Gas aus dem Raum R abgezogen wird.

Der plattenförmige Abschnitt 41 kann gasundurchlässig oder auch porös bzw. mit einer oder mehreren Öffnungen versehen sein, so dass Gas durch den Abschnitt 41 hindurchdringen kann.

Durch den Einsatz des Strömungsverteilers 40 lässt sich auf diese Weise der freie Strömungsquerschnitt beim Evakuieren gegenüber der Querschnittsfläche des Evakuierstutzens 50 bzw. des in diesen eingeführten Evakuierungsrohres 100 der Vakuumerzeugungsanlage vergrößern und somit die Effizienz beim Evakuieren steigern.

Aus der Figur ist weiter ersichtlich, dass der Formkörper nicht nur die Aufgabe hat, das Evakuieren des Raumes R zu ermöglichen, sondern zusätzlich auch noch eine Aufnahme für das Evakuierungsrohr 100 zu bilden, das von dem Evakuierstutzen 50 umschlossen ist.

Der Bereich 41 des Strömungsverteilers 40 ist vorzugsweise gasundurchlässig, sodass bei Evakuieren das Gas durch das Vlies 30 in den Raum R und von dem Raum R durch die Öffnungen in den stegartigen Bereichen 43 hindurch zu dem Evakuierungsrohr 100 gelangt.

Die Platte 20 ist vorzugsweise eben ausgeführt. Sie grenzt auf ihrer Innenseite an den Raum R zur Aufnahme des adsorbierenden Materials und auf ihrer Außenseite an die Hochbarrierefolie 10. Die Platte 20 verleiht der Anordnung eine gewissen mechanische Stabilität, ermöglicht das gute Anliegen einer Heizeinrichtung von außen, d.h. gemäß der Figur von unten und verhindert zudem, dass Strömungskanäle dadurch verstopft werden, dass das adsorbierende Material beim Evakuieren eingedrückt wird. Des Weiteren wird die Hochbarrierefolie vor Beschädigungen durch eindringendes adsobierende Material geschützt.

## Patentansprüche

1. Vakuumdämmkörper mit
einer vakuumdichten Umhüllung (10), und
einem Vakuumbereich, der von der Umhüllung (10) umgeben ist, wobei
die Umhüllung (10) mit einer Öffnung, insbesondere mit einem Evakuierstutzen (50), zur Evakuierung des Vakuumbereichs versehen ist, und
sich in dem Vakuumdämmkörper ein adsorbierendes Material (60) befindet, das teilweise oder insgesamt im Bereich der genannten Öffnung angeordnet ist, **dadurch gekennzeichnet, dass**
um die Öffnung herum und innerhalb des Vakuumbereichs eine Platte (20) angeordnet ist, die eine Wand eines Raumes bildet, in dem sich das adsorbierende Material (60) befindet, wobei
die Platte (20) auf ihrer Innenseite an den Raum zur Aufnahme des adsorbierenden Materials (60) und auf ihrer Außenseite an die Hochbarrierefolie (10) grenzt, und
die vakuumdichte Umhüllung (10) eine Hochbarrierefolie (10) ist.

2. Vakuumdämmkörper nach Anspruch 1, **dadurch gekennzeichnet, dass**
zwischen dem absorbierenden Material (60) und der Öffnung ein Formteil (40) angeordnet ist, das eine oder mehrere Formteilöffnungen aufweist, deren Strömungsquerschnitt größer ist als der Strömungsquerschnitt der Öffnung der Umhüllung (10).

3. Vakuumdämmkörper nach einem der vorhergehenden Ansprüche, **dadurch gekennzeichnet, dass** das adsorbierende Material (60) in Form einer Mehrzahl von einzelnen Körpern, vorzugsweise von einzelnen Kugeln und besonders bevorzugt in Form einer Kugelschüttung vorliegt.

4. Vakuumdämmkörper nach einem der vorhergehenden Ansprüche, **dadurch gekennzeichnet, dass** wenigstens ein Filtermaterial (30), insbesondere wenigstens ein Vliesmaterial (30) vorgesehen ist, dass sich zwischen dem Kernmaterial des Vakuumdämmkörpers und dem adsorbierenden Material (60) erstreckt.

5. Vakuumdämmkörper nach Anspruch 4, **dadurch gekennzeichnet, dass** das Filtermaterial (30) mit der Platte (20) und/oder mit dem Formteil (40) und/oder mit der Umhüllung (10) thermisch versiegelt ist.

6. Vakuumdämmkörper nach einem der vorhergehenden Ansprüche, **dadurch gekennzeichnet, dass** die vakuumdichte Umhüllung (10) beidseitig mit einer siegelfähigen Schicht ausgestattet ist.

7. Vakuumdämmkörper nach einem der vorhergehenden Ansprüche, **dadurch gekennzeichnet, dass** die vakuumdichte Umhüllung (10) sich um die Öffnung der Umhüllung (10) erstreckt und/oder außen an die Platte (20) angrenzt.

8. Vakuumdämmkörper nach einem der Ansprüche 2-7, **dadurch gekennzeichnet, dass** die Platte (20) und der Formkörper (40) aus unterschiedlichen Teilen bestehen, die miteinander verrastet oder thermisch versiegelt sind, oder dass die Platte (20) und der Formkörper (40) aus einem gemeinsamen Teil bestehen.

9. Vakuumdämmkörper nach einem der vorhergehenden Ansprüche, **dadurch gekennzeichnet, dass** das adsorbierende Material (60) unmittelbar angrenzend an die Öffnung und/oder unmittelbar angrenzend an das Formteil (40) angeordnet ist und/oder derart angeordnet ist, dass es die Öffnung und/oder das Formteil (40) umgibt.

10. Vakuumdämmkörper nach einem der vorhergehenden Ansprüche, **dadurch gekennzeichnet, dass** das adsorbierende Material (60) in einem Bereich angeordnet ist, der zu der Öffnung und/oder zu dem Formteil (40) benachbart ist.

11. Vakuumdämmkörper nach einem der vorhergehenden Ansprüche, **dadurch gekennzeichnet, dass** das adsorbierende Material (60) derart angeordnet ist, dass das bei der Vakuumerzeugung durch die Öffnung hindurchtretende Gas teilweise oder vollständig durch das adsorbierende Material (60) hindurchtritt.

12. Vakuumdämmkörper nach einem der vorhergehenden Ansprüche, **dadurch gekennzeichnet, dass** das adsorbierende Material (60) derart ausgebildet ist, dass dieses Wasser und/oder Stickstoff und/oder Sauerstoff adsorbiert und/oder dass es sich bei dem adsorbierenden Material (60) um wenigstens einen Getter und/oder Trockenmittel, insbesondere Zeolith handelt.

13. Wärmeisoliertes Behältnis, vorzugsweise Kühl- und/oder Gefriergerät mit einem Korpus und mit einem temperierten und vorzugsweise gekühlten Innenraum, der von dem Korpus umgeben ist sowie mit einem Verschlusselement, mittels dessen der temperierte und vorzugsweise gekühlte Innenraum verschließbar ist, wobei sich zwischen dem temperierten und vorzugsweise gekühlten Innenraum und der Außenwand des Behältnisses und vorzugsweise Gerätes ein Zwischenraum befindet,
**dadurch gekennzeichnet, dass**
in dem Zwischenraum ein Vakuumdämmkörper mit den Merkmalen eines der Ansprüche 1 bis 12 angeordnet ist.

## Claims

1. Vacuum insulation body, comprising
a vacuum-tight casing (10), and
a vacuum region which is surrounded by the casing (10), wherein
the casing (10) is provided with an opening, in particular an air evacuation port (50), for evacuating the vacuum region, and
an adsorbent material (60), arranged partly or wholly in the area of said opening, is located in the vacuum insulation body,
**characterized in that**
a plate (20) is arranged around the opening and inside the vacuum region, said plate forming a wall of a space in which the adsorbent material (60) is located, wherein
the plate (20) adjoins, on its inner side, the space for receiving the adsorbent material (60) and, on its outer side, the high-barrier film (10), and
the vacuum-tight casing (10) is a high-barrier film (10).

2. Vacuum insulation body according to claim 1, **characterized in that**
a molded part (40) is arranged between the adsorbent material (60) and the opening, said molded part comprising one or more molded part openings, the passage cross-section of which is greater than the passage cross-section of the casing (10).

3. Vacuum insulation body according to one of the preceding claims, **characterized in that** the adsorbent material (60) is in the form of a plurality of individual bodies, preferably individual beads and particularly preferably in the form of loose beads.

4. Vacuum insulation body according to one of the preceding claims, **characterized in that** at least one filter material (30), in particular at least one non-woven material (30), is provided, which extends between the core material of the vacuum insulation body and the adsorbent material (60).

5. Vacuum insulation body according to claim 4, **characterized in that** the filter material (30) is thermally sealed to the plate (20) and/or to the molded part (40) and/or to the casing (10).

6. Vacuum insulation body according to one of the preceding claims, **characterized in that** the vacuum-tight casing (10) is provided on both sides with a sealable layer.

7. Vacuum insulation body according to one of the preceding claims, **characterized in that** the vacuum-tight casing (10) extends around the opening of the casing (10) and/or adjoins the plate (20) on the outside.

8. Vacuum insulation body according to one of claims 2 to 7, **characterized in that** the plate (20) and the molded body (40) consist of different parts which are interlocked or thermally sealed with one another, or **in that** the plate (20) and the molded body (40) consist of a common part.

9. Vacuum insulation body according to one of the preceding claims, **characterized in that** the adsorbent material (60) is arranged directly adjacent to the opening and/or directly adjacent to the molded part (40) and/or is arranged in such a way that it surrounds the opening and/or the molded part (40).

10. Vacuum insulation body according to one of the preceding claims, **characterized in that** the adsorbent material (60) is arranged in a region which is adjacent to the opening and/or the molded part (40).

11. Vacuum insulation body according to one of the preceding claims, **characterized in that** the adsorbent material (60) is arranged in such a way that the gas flowing through the opening during vacuum generation passes partially or completely through the adsorbent material (60).

12. Vacuum insulation body according to one of the preceding claims, **characterized in that** the adsorption material (60) is configured in such a way that it adsorbs water and/or nitrogen and/or oxygen and/or **in that** the adsorption material (60) is at least one getter and/or desiccant, in particular zeolite.

13. Thermally insulated container, preferably a refrigerating and/or freezing apparatus, having a body and a thermally controlled, preferably refrigerated, interior space which is surrounded by the body, and having a closure element by means of which the thermally controlled, preferably refrigerated, interior space can be closed, wherein an interspace is located between the thermally controlled, preferably refrigerated, interior space and the outer wall of the container, preferably of the apparatus,
**characterized in that**
a vacuum insulation body having the features of one of claims 1 to 12 is arranged in the interspace.

## Revendications

1. Élément d'isolation sous vide comportant
une enveloppe (10) étanche au vide, et
une zone sous vide qui est entourée par l'enveloppe (10), dans lequel l'enveloppe (10) est pourvue d'une ouverture, en particulier une tubulure d'évacuation de l'air (50), pour évacuer l'air de la zone sous vide, et
un matériau adsorbant (60), disposé en partie ou en totalité dans la zone de ladite ouverture, se trouve dans l'élément d'isolation sous vide,
**caractérisé en ce que**
une plaque (20) est disposée autour de l'ouverture et à l'intérieur de la zone sous vide, ladite plaque formant une paroi d'un espace dans lequel se trouve le matériau adsorbant (60), dans lequel
la plaque (20) est contiguë, sur son côté intérieur, à l'espace destiné à recevoir le matériau adsorbant (60) et, sur son côté extérieur, au film haute barrière (10), et
l'enveloppe (10) étanche au vide est un film haute barrière (10).

2. Élément d'isolation sous vide selon la revendication 1, **caractérisé en ce que** une pièce moulée (40) est disposée entre le matériau adsorbant (60) et l'ouverture, ladite pièce moulée présentant une ou plusieurs ouvertures de pièce moulée, dont la section de passage est supérieure à la section de passage de l'ouverture de l'enveloppe (10).

3. Élément d'isolation sous vide selon l'une des revendications précédentes, **caractérisé en ce que** le matériau adsorbant (60) se présente sous la forme d'une pluralité de corps individuels, de préférence de billes individuelles et de manière particulièrement préférée sous la forme de billes en vrac.

4. Élément d'isolation sous vide selon l'une des revendications précédentes, **caractérisé en ce qu'**au moins un matériau filtrant (30), en particulier au moins un matériau non tissé (30) est prévu, lequel s'étend entre le matériau central de l'élément d'isolation sous vide et le matériau adsorbant (60).

5. Élément d'isolation sous vide selon la revendication 4, **caractérisé en ce que** le matériau filtrant (30) est scellé thermiquement avec la plaque (20) et/ou avec la pièce moulée (40) et/ou avec l'enveloppe (10).

6. Élément d'isolation sous vide selon l'une des revendications précédentes, **caractérisé en ce que** l'enveloppe (10) étanche au vide est munie des deux côtés d'une couche apte à être scellée.

7. Élément d'isolation sous vide selon l'une des revendications précédentes, **caractérisé en ce que** l'enveloppe (10) étanche au vide s'étend autour de l'ouverture de l'enveloppe (10) et/ou est contiguë à la plaque (20) côté extérieur.

8. Élément d'isolation sous vide selon l'une des revendications 2 à 7, **caractérisé en ce que** la plaque (20) et le corps moulé (40) sont constitués de différentes parties qui sont enclenchées ou thermiquement scellées l'une avec l'autre ou **en ce que** la plaque (20) et le corps moulé (40) sont constitués d'une pièce commune.

9. Élément d'isolation sous vide selon l'une des revendications précédentes, **caractérisé en ce que** le matériau adsorbant (60) est disposé directement contigu à l'ouverture et/ou directement contigu à la pièce moulée (40) et/ou est disposé de telle manière qu'il entoure l'ouverture et/ou la pièce moulée (40).

10. Élément d'isolation sous vide selon l'une des revendications précédentes, **caractérisé en ce que** le matériau adsorbant (60) est disposé dans une zone qui est adjacente à l'ouverture et/ou à la pièce moulée (40).

11. Élément d'isolation sous vide selon l'une des revendications précédentes, **caractérisé en ce que** le matériau adsorbant (60) est disposé de telle manière que le gaz passant par l'ouverture lors de la génération du vide traverse en partie ou entièrement le matériau adsorbant (60).

12. Élément d'isolation sous vide selon l'une des revendications précédentes, **caractérisé en ce que** le matériau adsorbant (60) est réalisé de telle manière qu'il adsorbe l'eau et/ou l'azote et/ou l'oxygène et/ou **en ce que** le matériau adsorbant (60) est au moins un getter et/ou un agent dessiccateur, en particulier de la zéolithe.

13. Contenant isolé thermiquement, de préférence appareil de réfrigération et/ou de congélation comportant un corps et un espace intérieur thermorégulé et de préférence réfrigéré, qui est entouré par le corps, et comportant un élément de fermeture, au moyen duquel l'espace intérieur thermorégulé et de préférence réfrigéré peut être fermé, un espace intermédiaire se trouvant entre l'espace intérieur thermorégulé et de préférence réfrigéré et la paroi extérieure du contenant et de préférence de l'appareil,
**caractérisé en ce que**
un élément d'isolation sous vide comportant les caractéristiques selon l'une des revendications 1 à 12 est disposé dans l'espace intermédiaire.
